# EUROPEAN PATENT APPLICATION

(11) **EP 0 607 109 A1**
(43) Date of publication of application: **20.07.1994**
(21) Application number: 94850003.8
(22) Date of filing: 11.01.1994
(51) Int. Cl.: B60G 5/04

(54) **High ground clearance vehicle suspension**

(30) Priority: 15.01.1993 US 5014
(71) Applicant: ATLAS COPCO WAGNER INC., Portland, Oregon 97230 (US)
(72) Inventor: Wagner, Edwin R., Sandy, Oregon 97055 (US)
(74) Representative: Roth, Ernst Adolf Michael

(57) **Abstract**

A suspension apparatus (12) with a walking beam (20) positioned above the wheel axles and pivotally attached to the vehicle frame at a central position (40) on the beam above such axles. The opposite ends (44,54) of the beam are pivotally connected to respective wheel axle assemblies (70,72,80,82) at locations on the assemblies above the respective wheel axles. Thus, the entire beam is positioned to provide substantially greater ground clearance than the prior art. Torque rods (118,126) may be attached between the frame and attachment points below the wheel axes on the axle assemblies.

## Description

### TECHNICAL FIELD

This invention relates to heavy-duty construction and mining vehicles, and more particularly to suspensions for such vehicles.

### BACKGROUND OF THE ART

Heavy-duty equipment, such as dump vehicles, must operate on irregular, unpaved surfaces in mines and on construction sites. Accordingly, it has been necessary to provide suspension systems having substantial compliance capabilities so that the vehicle wheels, particularly the drive wheels, maintain contact with the ground, even over irregular terrain.

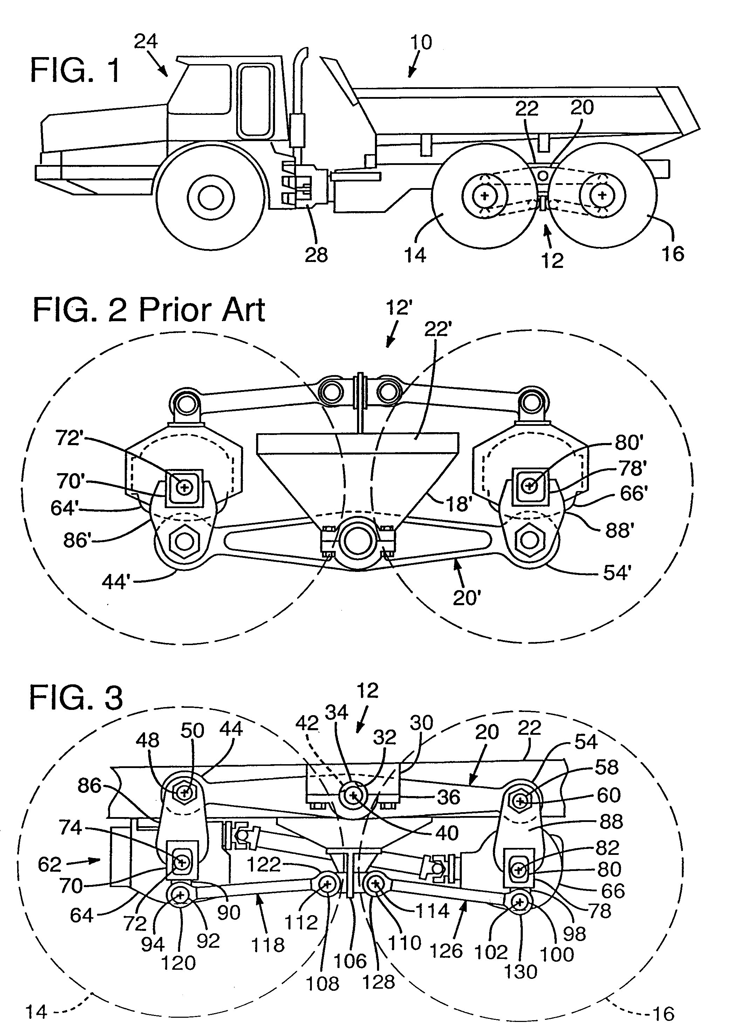

A prior art twin axle tandem suspension 12' is shown in Fig. 2. This is a schematic illustration of an RS-1200 tandem suspension available from Hendrickson of Lyons, Illinois. It employs a walking beam or equalizer beam 20' pivotally attached at a central location to a rigid plate 18' depending downwardly from the vehicle frame 22'. The respective ends 44', 54' of the beam each support a respective axle housing assembly 70', 78' so that each axle 72', 80' is positioned above the respective end portion of the walking beam.

The primary disadvantage of the prior art system is a limited ground clearance that prevents operation over large obstacles, and which causes significant drag resistance when operating in deep mud conditions. In the prior art system, the walking beam is positioned well below the axles; the upper side of each end of the walking beam is spaced below the lower sides of the axle housings 70', 78'. Thus, the walking beam also extends well below differential housings 64', 66', which are generally centered on the wheel axles and extend only a limited distance below the axles. Consequently, there is a danger that the walking beams might collide with obstacles that might otherwise clear the differentials. Such a collision may cause damage to the vehicle and may jeopardize the safety of the vehicle crew and surrounding personnel.

Because of the foregoing problems associated with existing vehicle suspensions, there is a need for an effective suspension system that overcomes such problems. This, therefore, is the primary objective of the present invention.

### SUMMARY OF THE INVENTION

According to the illustrated embodiment of the present invention, the primary object is achieved by providing a suspension apparatus with a walking beam positioned above the wheel axles and pivotally attached to the vehicle frame at a central position on the beam above such axles. The opposite ends of the beam are pivotally connected to respective wheel axle assemblies at locations on the assemblies above the respective wheel axles. Thus, the entire beam is positioned to provide substantially greater ground clearance than the prior art.

### BRIEF DESCRIPTION OF THE DRAWINGS

Fig. 1 is a side view of an embodiment of the present invention.

Fig. 2 is a side view of a prior art suspension system.

Fig. 3 is a side view of the suspension system of the embodiment of Fig. 1.

### DETAILED DESCRIPTION OF A PREFERRED EMBODIMENT

Figure 1 shows a dump vehicle 10 having a rear suspension apparatus 12 mounted on each side of the vehicle. The suspension apparatus 12 includes a front wheel 14 and a rear wheel 16, each of which is carried by an assembly that is pivotally attached to an opposite end of a walking beam or equalizer beam 20. The equalizer beam 20 is pivotally attached to the vehicle frame 22 at the beam's midpoint. Accordingly, the front wheel 14 rises while the rear wheel 16 descends correspondingly, and vice versa. This accommodates and "averages out" bumps and holes in the surface on which the vehicle is operated.

The dump vehicle 10 includes a cab section 24 attached to the vehicle frame 22 by an articulated joint 28 that allows the cab to pivot or yaw laterally with respect to the frame 22 for steering, and to rotate or roll with respect to the frame for accommodating terrain variations. In total, the vehicle 10 has six wheels, all of which should remain in contact with a roughly contoured ground surface.

Figure 3 shows a detailed view of the suspension apparatus 12 as installed on the left side of the vehicle. A trunnion block 30 is attached to the frame and defines a semi-circular recess 32. A cylindrical trunnion 34 is secured in the recess by a trunnion cap 36 bolted to the trunnion block 30. Accordingly, the trunnion 34 provides a suspension pivot connection having a horizontal central pivot axis 40 perpendicular to the longitudinal axis of the vehicle.

The equalizer beam 20 is a rigid elongated member defining a bore 42 at its mid-point. The bore 42 closely receives the trunnion 34 so that the beam 20 may pivot freely about the suspension pivot central axis 40. The beam 20 has a first end 44 including a first pivot pin 48 protruding horizontally therefrom. The first pivot pin 48 is centered on a first end pivot axis 50. Similarly, the beam 20 has an opposite second end 54 including a protruding second pivot pin 58 centered on a second end pivot axis 60. In the preferred embodiment, the beam 20 is generally straight, with the pivot axes 40, 50, and 60 residing in a common plane. However, different applications may dictate that the beam be angled so that the axes are not positioned within the same plane.

The vehicle 10 has a drive train 62 including a first differential housing 64 positioned generally between the front wheels 14 and a second differential housing 66 positioned generally between the rear wheels 16. A pair of first axle housings 70 protrude laterally from opposite sides of the first differential housing 64. A first axle 72 is received within the housing 70, and is connected to a differential gear (not shown) contained within the housing 64 so that the axle 72 is driven to rotate on a first wheel axis 74. The distal end of the axle 72 is connected to wheel 14 to drive the wheel, which rotates on the first wheel axis 74.

Similarly, the second differential housing includes a pair of second axle housings 78 containing a second axle 80 rotating on a second wheel axis 82 to drive wheel 16.

The suspension apparatus provided on the right side of the vehicle operates independently of that shown on the left, although transverse torque rods (not shown) may link each beam 20 to a respective differential housing 64, 66 to resist excessive pivoting in opposite directions.

A pair of first support plates 86 is rigidly attached at their lower ends to the first axle housing 70 and are spaced apart to receive the first beam end 44 therebetween. The plates 86 are pivotally attached at their upper ends to the beam first end, defining bores for receiving the first pivot pin 48.

Similarly, a pair of second support plates 88 is rigidly attached to the second axle housing 78 and pivotally attached to the second beam end 54 in the same manner.

Consequently, the end pivot axes 50, 60 of the beam 20 are positioned vertically above the respective wheel axes 74, 80. The beam ends need not be laterally aligned with the wheel axes, but are positioned within horizontal planes at a level above the corresponding portions of the wheel axes.

A first torque rod attachment bracket 90 depends below a distal end of the first axle housing 70 and is rigidly attached thereto. The bracket 90 includes a first attachment pin 92 centered on a horizontal axis 94 oriented parallel to and positioned generally below the first wheel axis 74. Similarly, a second torque rod attachment bracket 98 having a second attachment pin 100 centered on axis 102 is attached below the second axle housing 78. Together, plates 86, axle housing 70, bracket 90, and pin 92 comprise a first wheel axle assembly. Likewise, plates 88, axle housing 78, bracket 98, and pin 100 comprise a second wheel axle assembly.

A torque rod frame bracket 106 is rigidly attached to the frame 22, and depends downwardly therefrom, aligned with the suspension pivot axis 40. The bracket 106 includes a front bracket attachment pin 108 and a rear bracket attachment pin 110, each centered on a respective horizontal axis 112, 114. Axes 112 and 114 are positioned in a common horizontal plane above axes 94 and 102.

A pair of torque rods 118 and 126 connect the wheel assemblies to the frame bracket 106. The first elongated torque rod 118 has a front end 120 pivotally attached to the first attachment pin 92 and a rear end 122 pivotally attached to the front bracket attachment pin 108. Likewise, the second torque rod 126 has a front end 128 pivotally attached to the rear bracket attachment pin 110, and a rear end 130 pivotally attached to the second attachment pin 100.

The torque rods 118, 126 provide horizontal positioning of the wheels and proportionally resist excessive flexure of the suspension. The torque rods need only withstand axial and torsional stresses, and do not support the weight of the vehicle. Therefore, the rod ends may be relatively slim, unlike the equalizer beam 20, which supports a substantial load.

Each rod end 120, 130 is positioned at a level only slightly below the respective axle housing, thereby slightly limiting ground clearance of the vehicle. As shown in Fig. 3, the rod ends 120, 130 do not extend appreciably below the lowest points of the differential housings 64, 66.

In the preferred embodiment, the lowest points on the differential housings are 25 inches above ground. The lowest points on the suspension (torque rod ends 120, 130) are 24 inches above ground, and widely spaced apart by about 4 feet to permit some obstacles to pass therebetween.

Having illustrated and described the principles of the invention by what is presently a preferred embodiment, it should be apparent to those persons skilled in the art that the illustrated embodiment may be modified without departing from such principles. The claimed invention includes not only the illustrated embodiment, but all such modifications, variations and equivalents thereof as fall within the true spirit and scope of the following claims.

## Claims

1. A suspension apparatus for a vehicle having a frame with a pivot connection comprising:
an equalizer beam pivotally attached to the frame pivot connection, and having opposite first and second end portions;
a first wheel axle assembly pivotally attached to the beam first end portion to pivot about a first end pivot axis;
a first wheel rotatably attached to the first wheel axle assembly for rotation about a first wheel axis; and
a second wheel axle assembly pivotally attached to the beam second end portion to pivot about a second end pivot axis;
a second wheel rotatably attached to the second wheel axle assembly for rotation about a second wheel axis; and
the first end pivot axis being positioned at a first level above the first wheel axis, the second end pivot axis being positioned at a second level above the second wheel axis such that a high ground clearance is provided.

2. The apparatus of claim 1 wherein the entire equalizer beam is positioned at a level above the first and second wheel axles.

3. The apparatus of claim 1 wherein the equalizer beam is an elongated member having a central portion pivotally attached to the suspension pivot connection, and wherein the central portion is located generally at a midpoint on the beam between first and second end portions.

4. The apparatus of claim 1, including a first elongated torque rod pivotally attached at a first rod end to the frame at a rod pivot point on the frame, the torque rod having a second end pivotally attached to the first wheel axle assembly.

5. The apparatus of claim 4 wherein the rod's second end is positioned at a level below the first wheel axis.

6. The apparatus of claim 4 wherein the rod's second end is positioned at a level below the rod first end.

7. The apparatus of claim 4 wherein the rod's first end is positioned at a level generally below the beam's central portion.

8. The apparatus of claim 4 wherein the rod's second end is positioned at a level below the first end portion of the equalizer beam.

9. The apparatus of claim 1 wherein the pivot connection is positioned at a level above the first and second wheel axes.

10. A suspension apparatus for a vehicle having a frame with a suspension pivot connection comprising:
an equalizer beam pivotally attached to the frame pivot connection, and having opposite first and second end portions;
a first axle assembly pivotally attached to the beam first end portion to pivot about a first end pivot axis;
a first wheel rotatably attached to the first axle assembly and rotatable about a first wheel axis; and
a second wheel axle assembly pivotally attached to the beam second end portion to pivot about a second end pivot axis;
a second wheel rotatably attached to the second axle assembly and rotatable about a second wheel axis;
the beam being pivotally attached to the frame pivot connection at a level above the first and second wheel axes to provide a high ground clearance.

11. The apparatus of claim 10 wherein the entire beam is positioned at a level above the first and second wheel axes.

12. The apparatus of claim 10, including a first elongated torque rod pivotally attached at a first rod end to the frame at a rod pivot point on the frame, the torque rod having a second end pivotally attached to the first wheel axle assembly.

13. The apparatus of claim 12 wherein the second end of the rod is positioned at a level below the first wheel axis.

14. The apparatus of claim 12 wherein the second end of the rod is positioned at a level below the first end of the rod.

15. The apparatus of claim 12 wherein the first end of the rod is positioned at a level below the central portion of the beam.

16. The apparatus of claim 12 wherein the second end of the rod is positioned at a level below the equalizer beam first end portion.

17. The apparatus of claim 10 wherein the first end pivot axis is positioned at a level generally above the first wheel axis.

18. The apparatus of claim 17 wherein the second end pivot axis is positioned at a level generally above the second wheel axis.

19. The apparatus of claim 12 including a second torque rod operably connecting the frame to the second wheel assembly.
